# EUROPÄISCHE PATENTSCHRIFT

(11) **EP 0 658 502 B1**
(45) Veröffentlichungstag und Bekanntmachung des Hinweises auf die Patenterteilung: **12.08.1998**
(21) Anmeldenummer: 94119716.2
(22) Anmeldetag: 14.12.1994
(51) Int. Cl.: B65G 69/18, B65G 11/14

(54) **Vorrichtung zum Beladen eines Silofahrzeuges**
Loading device for a silo vehicle
Dispositif de chargement d'un véhicule-silo

(30) Priorität: 16.12.1993 DE 9319205 U
(43) Veröffentlichungstag der Anmeldung: 21.06.1995
(73) Patentinhaber: Stanelle, Karl-Heinz, D-74363 Güglingen (DE)
(72) Erfinder: Stanelle, Karl-Heinz, D-74363 Güglingen (DE)
(74) Vertreter: Müller, Hans, Dipl.-Ing.

(56) Entgegenhaltungen:
- DE-A- 2 235 747
- DE-A- 2 821 210
- DE-A- 3 727 561
- US-A- 3 241 581
- US-A- 4 225 033
- US-A- 5 154 271

## Beschreibung

### TECHNISCHES GEBIET

Die Erfindung betrifft eine Vorrichtung zum Beladen eines Silofahrzeuges oder dergleichen Silobehälter mit rieselfähigem Schüttgut.

Der Einsatzbereich derartiger Beladevorrichtungen ist dort, wo lose, staubförmige und körnige Schüttgüter schnell und ohne Belastung der Umwelt aus einem Vorratsbehälter in ein Silofahrzeug oder in ein sonstiges Transportmittel verladen werden sollen. Als Schüttgüter können Zement, Kalk, Gips, Fertigputz, Getreide und dergleichen staubförmige Materialien vorhanden sein.

Zum Beladen eines Silofahrzeuges mit Hilfe einer derartigen Beladevorrichtung wird dieselbe mit ihrem Aufsetzkonus auf dem Dom des Silofahrzeuges staubdicht aufgesetzt. Der innige Kontakt zwischen dem Aufsetzkonus und dem Dom ermöglicht eine einwandfreie Staubabdichtung während des Beladevorganges.

Das im Silofahrzeug durch die Befüllung mit dem Schüttgut verdrängte Staub-Luft-Gemisch wird durch den in der Beladevorrichtung vorhandenen Abzugskanal nach oben abgesaugt.

### STAND DER TECHNIK

Aus der EP-A-73 349 ist eine Beladevorrichtung bekannt, bei der mehrere verschleißfeste, über die Fallhöhe verteilt angeordnete, sich jeweils in Längsrichtung des Fallschachtes nach unten verjüngende Trichter vorhanden sind. Innerhalb der Trichter wird das Schüttgut nach unten in das Silofahrzeug hineingefördert. Die Trichter besitzen die Form eines hohlen Kegelstumpfes mit kreisförmiger Grundfläche. Der jeweils obere Trichter sitzt mit seinem unteren Ende mehr oder weniger weit innerhalb des oberen Bereichs des jeweils unteren Trichters, woraus sich eine unterschiedliche Bauhöhe der Beladevorrichtung ergibt. Aus Gründen einer möglichst großen Verladeleistung wird der Innendurchmesser der Trichter möglichst groß gewählt. Da die Neigung der Seitenwände eines jeden Trichters allerdings nicht zu steil sein darf, um ein Verkeilen ineinandersteckender Trichter zu verhindern, hat sich eine Trichterform bei allen auf dem Markt befindlichen Trichtern ergeben, bei der der jeweils obere Öffnungsrand eines jeden Trichters einen größeren Durchmesser besitzt als der von einem Verschlußteil von unten her zu verschließende untere Öffnungsrand des Aufsetzkonus. Dies bedeutet, daß die Zugeinrichtung für das Verschlußteil, mit dem die übereinander angeordneten Trichter von unten her hochgehoben und dadurch zusammengeschoben werden, nicht mehr ohne störende Umlenkeinrichtungen gradlinig zwischen den Trichtern und dem diese außen konzentrisch umgebenden Faltenbalg hindurchgeführt werden können. Das Verschlußteil einer derartigen, nach unten jeweils verjüngende Trichter aufweisenden Beladevorrichtung ist daher an einem Seil befestigt, das zentrisch innerhalb der Beladevorrichtung und damit zentrisch im Fallschacht innerhalb der Trichter, vorhanden ist. Dieses Seil ist damit aber dem Schüttgutstrom ausgesetzt, so daß es einem starken Verschleiß unterliegt. Da dieses Seil im oberen Bereich der Beladevorrichtung rechtwinklig aus dem Schüttgutstrom und damit aus dem Fallschacht herausgeführt werden muß, damit das Verschlußteil motorisch oder per Hand hochgezogen oder abgesenkt werden kann, ist auch diese Umlenkrolle dem Schüttgutstrom und damit einem entsprechend großen Verschleiß ausgesetzt. Außerdem hat sich herausgestellt, daß durch Anhaften von Schüttgutteilchen an der Umlenkrolle deren Funktionstüchtigkeit beeinträchtigt wird. Auch dies führt zu unerwünschten Störungen während des Betriebs derartiger Beladevorrichtungen.

Darüber hinaus ist aus der DE-A-37 27 561 eine vergleichbare Beladevorrichtung bekannt, bei der im Querschnitt nicht kreisförmige sondern quadratische Trichter vorhanden sind. Dadurch ist es möglich, die Zugseile, an denen das Verschlußteil anhängt, außerhalb des Fallschachtes und trotzdem innerhalb des Ausetzkonus anzuordnen. Durch die gerade Außenwand der Trichter ist gegenüber den runden Trichtern nunmehr ein Freiraum zwischen der Außenwand der Trichter und dem Aufsetzkonus zum Hindurchführen der Zugseile vorhanden. Allerdings können sowohl die im Querschnitt runden als auch die im Querschnitt quadratischen Trichter nicht durch den Aufsetzkonus hindurchgeführt werden. Dadurch ist die untere Auslauföffnung der Beladevorrichtung immer im Bereich des Silodomes und damit in etwa im Bereich des Aufsetzkonus vorhanden. Bei sehr großen Silofahrzeugen bzw. bei sehr großen Fallhöhen des jeweiligen Schüttgutes aus der Beladevorrichtung in das Silofahrzeug hinein kann es dadurch bei Schüttgütern, die aus unterschiedlichen Körnungen mit verschiedenen spezifischen Gewichten zusammengesetzt sind, zu unerwünschten Entmischungen kommen.

Diese Gefahr des Entmischens ist auch bei der aus der DE-A-28 21 210 bekannten Verladegarnitur vorhanden. Bei dieser Verladegarnitur ist ein Innenteleskop für das Schüttgut vorhanden, dessen unterster Rohrabschnitt aus einem sich konisch verjüngenden Austragrohr gebildet wird. Das Anheben und Absenken der Verladegarnitur erfolgt durch Hochziehen und Ablassen eines Kegelstückes, das zentrisch im Fallschacht an einem aufwickelbaren Seil angehängt ist. Beim Absenken des Kegelstückes löst sich dasselbe vom unteren Rand des Austragrohres. Beim Anheben des Kegelstückes bewegt sich dasselbe gegen den unteren Rand des Austragrohres. Beim weiteren Anheben des Kegelstückes wird das Austragrohr mit nach oben bewegt. Ein zwischen Austragrohr und Kegelstuck ausgebildeter Ringspalt ist in der völlig nach unten abgesenkten und maximal ausgezogenen Stellung der Verladegarnitur vorhanden, ansonsten bis zum Wert Null variabel groß. Diese vorbekannte Verladegarnitur wird zum Befüllen beispielsweise eines Silofahrzeugs von oben auf dessen Dom aufgesetzt. Die Füllhöhe des durch den Dom hindurch in das Silofahrzeug eingefüllten Füllgutes ändert sich in Abhängigkeit mit der eingefüllten Menge an Füllgut.

### DARSTELLUNG DER ERFINDUNG

Ausgehend von diesem Stand der Technik liegt der Erfindung die Aufgabe zugrunde, eine Beladevorrichtung der eingangs genannten Art anzugeben, bei der möglichst keine Gefahr für eine Entmischung des geförderten Schüttgutes besteht.

Diese Aufgabe wird durch die Merkmale des Anspruchs 1 gelöst. Weiterbildungen der erfindungsgemäßen Beladevorrichtung sind Gegenstand von Unteransprüchen.

Die erfindungsgemäße Vorrichtung kann durch den Dom eines Silofahrzeuges oder eines sonstigen Silobehälters nach unten hindurchgeführt werden. Dies ist dadurch möglich, daß der unterste Rohrabschnitt des Fallschachtes im Querschnitt kleiner ist als der Aufsetzkonus, mit dem die Vorrichtung auf dem Dom von oben aufsitzt. Der Fallschacht kann dabei unterschiedlich weit in den Silobehälter eingeführt werden. Unabhängig von der Lageposition des unteren Randes seines Fallschachtes hat der als Verschlußteil ausgebildete Auslaufkonus immer einen Abstand zum unteren Rand des Fallschachtes.

Eine derartige Beladevorrichtung ermöglicht ein Ausströmen von Schüttgut durch den immer freien Ringspalt zwischen Auslaufkonus und unterstem Rohr unabhängig davon, in welcher Höhe das untere Rohr und damit die Auslauföffnung der Beladevorrichtung angeordnet ist. Bei voll in ein Silofahrzeug abgesenkter Beladevorrichtung, d. h. bei voll abgesenktem Fallschacht, ist das Ausströmen von Schüttgut in gleicher Weise möglich wie bei sonstigen, beliebigen Positionierungen der Auslaufmündung unterhalb es Aufsetzkonus. Auf diese Weise kann die Mündungsöffnung in geringem Abstand zur jeweiligen Füllhöhe des bereits eingefüllten Schüttgutes positioniert werden. Der Beladevorgang kann mit der erfindungsgemäßen Beladevorrichtung damit auf die Weise stattfinden, daß während des Beladens der Fallschacht, d. h. die teleskopartig ineinandersteckbaren Rohrabschnitte, kontinuierlich oder schrittweise, in Abhängigkeit von dem höhenmäßigen Anwachsen des jeweils bereits eingelagerten Schüttgutes hochgezogen, d. h. zurückgezogen wird. Dadurch bleibt die freie Fallhöhe des Schüttgutes außerhalb der Beladevorrichtung wünschenswert klein. Dies hat wiederum den Vorteil, daß ein Entmischen des Schüttgutes praktisch nicht vorkommen kann. Sogenannte Leichtputze, die aufgrund ihrer heterogenen Zusammensetzung leicht zur Entmischung neigen, können dadurch problemlos mit der erfindungsgemäßen Beladevorrichtung umgefüllt bzw. verladen werden.

Um die Gesamtstärke der Wandung von ineinandergesteckten Rohrabschnitten nicht zu groß werden zu lassen und um andererseits die lichte Weite des innersten Rohres möglichst groß ausbilden zu können, besitzen die Rohrabschnitte eine möglichst große Länge. Dadurch kann die Anzahl der erforderlichen Rohre auf ein Minimum beschrankt werden. Lange Rohre lassen sich aber nicht so leicht ineinanderschieben, insbesondere dann, wenn sie wie im Stand der Technik bei den bekannten Beladevorrichtungen mit den runden oder quadratischen Trichtern bekannt, beim Hochfahren der Beladevorrichtung von unten nach oben geschoben werden müssen. Die erfindungsgemäße Beladevorrichtung zeichnet sich daher nach einer vorteilhaften Ausführungsform dadurch aus, daß die Zugvorrichtung zum Anheben des Fallschachtes jeweils im oberen Randbereich eines Rohrabschnittes befestigt ist. Die einzelnen Rohre werden daher nicht nach oben von unten her geschoben sondern können nach oben gezogen werden. Ein Verkeilen oder Verklemmen der Rohre beim nach oben Fahren des Fallschachtes wird dadurch vermieden.

In der Praxis läßt es sich nicht vermeiden, daß der Aufsetzkonus auf dem Dom eines Silofahrzeuges immer exakt ausgerichtet aufsitzen wird. Bei mehr oder weniger schiefen Auflagen des Aufsetzkonus auf dem Dom wird der Fallschacht, d. h. die teleskopartig ineinandersteckenden Rohrabschnitte schief zur Achse des Aufsetzkonus ausgerichtet sein. Die im Zwischenraum zwischen der Rohrwandung und dem Aufsetzkonus angeordneten Zugseile, an denen der Auslaufkonus befestigt ist, könnten daher zwischen dem Aufsetzkonus und den Rohrabschnitten eingeklemmt werden. Um dies zu verhindern kann nach einer wesentlichen Weiterbildung der Erfindung ein Abstandshalter im Zwischenraum zwischen dem Aufsetzkonus und dem Fallschacht angeordnet werden. Durch diesen Abstandshalter können dann die Rohrabschnitte in einem derartigen Abstand zum unteren Mündungsrand des Aufsetzkonus gehalten werden, daß die Zugvorrichtung für den Auslaufkonus nicht am Mündungsrand eingeklemmt werden kann. Dieser Abstandshalter kann eine die Rohrabschnitte lose umgebende Ringscheibe sein, die nach einem Ausführungsbeispiel im hochgefahrenen Zustand der Beladevorrichtung lose auf dem oberen Rand des untersten Rohrabschnittes aufliegt.

Über eine Erkennungseinrichtung kann die Position einer vorgegebenen Stelle des Fallschachtes bezogen auf den Aufsetzkonus festgestellt werden. Diese Erkennungseinrichtung kann ein Näherungsschalter und insbesondere ein induktiver Näherungsschalter sein. Sofern dieser Näherungsschalter im Mantelbereich des untersten Rohrabschnittes angeordnet wird, kann beim Hochfahren des Fallschachtes und beim Vorbeifahren des untersten Rohres am Aufsetzkonus ein Schaltsignal zum Beenden des Befüllvorganges erzeugt werden. Auf diese Weise läßt sich automatisch bei Erreichen einer vorgegebenen Füllhöhe innerhalb des Silofahrzeuges die Beladevorrichtung verschließen.

Nachdem der Auslaufkonus einen vorgegebenen festen Abstand zum unteren Mündungsrand des untersten Rohres aufweist, wird der Fallschacht durch Hochfahren des Auslaufkonus nicht verschlossen. Der Fallschacht wird erst dann verschlossen, wenn der Auslaufkonus von unten an dem Aufsetzkonus anliegt. Die gesamte Beladevorrichtung ist dann nach unten verschlossen. Gleichzeitig muß dann sichergestellt werden, daß durch den Fallschacht kein Schuttgut mehr nach unten hindurchfallen kann, da dieses Schüttgut dann in den Bereich zwischen den Rohrabschnitten und dem dieselben umgebenden Faltenbalg eindringen würde. Allerdings könnte in diesem Zusammenhang dann auch eine Beweglichkeit des Auslaufkonus vorgesehen werden und derselbe beispielsweise dann an das unterste Rohr fest und dasselbe verschließend anlegbar ausgebildet werden.

Der üblicherweise an Beladevorrichtungen unten vorhandene Füllstandsmelder kann wie im Stand der Technik bekannt ausgebildet sein. Für leicht entmischbare Schüttgütern, wie z. B. Leichtputze, hat sich ein Füllstandsmelder in Art der an sich bekannten Vibrationssonde als besonders geeignet herausgestellt.

Weitere Ausbildungen und Vorteile der Erfindung ergeben sich durch die in den Ansprüchen ferner angegebenen Merkmale sowie aus dem nachfolgenden Ausführungsbeispiel.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:

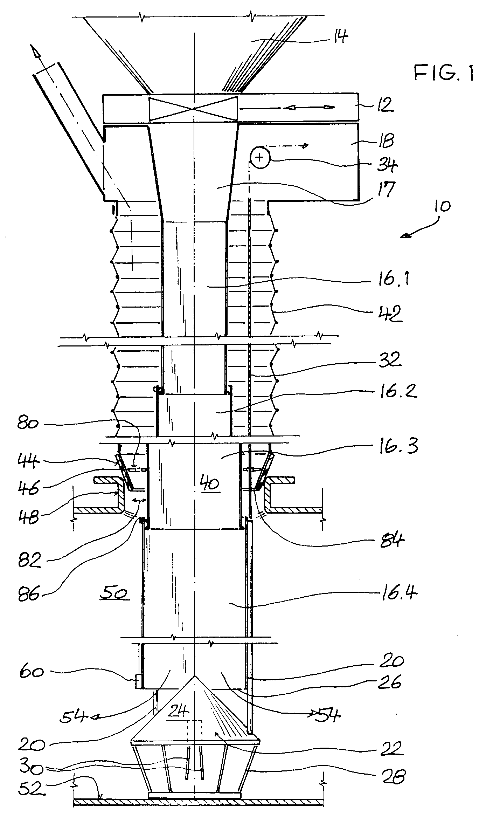

- Fig. 1: einen teilweise Längsschnitt durch eine auf dem Dom eines Silofahrzeuges aufsitzende Beladevorrichtung nach der Erfindung,
- Fig. 2: eine Darstellung entsprechend Fig. 1 bei gegenüber Fig. 1 teilweise wieder etwas hochgefahrenem Fallschacht vom Siloboden des Silofahrzeuges,
- Fig. 3: eine Darstellung entsprechend Fig. 2 mit fast vollständig angehobenem Fallschacht, während des Beladevorganges,
- Fig. 4: eine Darstellung entsprechend Fig. 3 nach unmittelbarem Beenden des Befüllvorganges, bei noch auf dem Silofahrzeug aufsitzender Beladevorrichtung, und
- Fig. 5a bis e: eine schematische Darstellung der unterschiedlich weit hochgehobenen Beladevorrichtung.

### WEGE ZUR AUSFÜHRUNG DER ERFINDUNG

Ein sogenannter Belader 10, der eine Vorrichtung zum Beladen eines Silofahrzeuges oder dergleichen Silobehälter mit rieselfähigem Schüttgut darstellt, ist unterhalb eines Schiebers 12 vorhanden. Dieser Schieber 12 schließt seinerseits von unten an den Auslauftrichter 14 eines in der Zeichnung nicht näher dargestellten Silobehälters an.

Der Belader 10 besitzt mehrere teleskopartig ineinandersteckende Rohre 16 (16.1, 16.2, 16.3, 16.4), die im Querschnitt jeweils kreisfömrig sind. Das jeweils untere Rohr besitzt einen größeren Querschnitt als das jeweils anschließende obere Rohr. Das oberste Rohr 16.1 hat damit den kleinsten Kreisquerschnitt und das unterste Rohr 16.4 den entsprechend größten Kreisquerschnitt.

Das oberste Rohr 16.1 ist mit einem Zwischenrohr 17 verbunden, welches seinerseits von unten an den Schieber 12 anschließt.

An der Außenseite des untersten Rohres 16.4 ist ein Zugstab 20 befestigt, an dessem unteren Ende ein nach unten sich konisch erweiternder Auslaufkonus 22 befestigt ist. Die Auslauffläche 24 dieses Auslaufkonus 22 ist im Abstand zum unteren Rand 26 des untersten Rohres 16.4 vorhanden.

Auf der Unterseite des Auslaufkonus 22 ist innerhalb eines Schutzkorbes 28 ein Füllstandsmelder 30 vorhanden, der im vorliegenden Fall als Vibrationssonde ausgebildet ist.

An dem oberen Ende des Zugstabes 20 und damit im oberen Bereich des Rohres 16.4 ist ein Zugseil 32 befestigt, das außerhalb der Rohre 16 nach oben in einen Kopfkasten 18 einmündet. Innerhalb des Kopfkastens 18 wird das Zugseil 32 über eine Umlenkrolle 34 in nicht näher dargestellter, bekannter Weise einer motorisch angetriebenen Wickelvorrichtung zugeführt. Von dieser Wickelvorrichtung läßt sich das Zugseil 32 auf- und abwickeln.

Der Auslaufkonus 22 wird von zwei Zugstäben 20 gehalten, so daß auch zwei Zugseile 32, von denen nur ein Zugseil 32 zeichnerisch dargestellt ist, vorhanden sind und entsprechend aufgewickelt bzw. abgewickelt werden können.

Im Abstand außerhalb der den Fallschacht 40 bildenden Rohre 16 ist ein Faltenbalg 42 vorhanden, der an der Unterseite des Kopfkastens 18 angeschlossen ist. An der Unterseite des Faltenbalges 42 ist ein Aufsetzkonus 44 anhängend befestigt. Dieser Aufsetzkonus 44 ist ein sich nach unten konisch verjüngender Kreiskegelstumpf, der auf seiner Außenseite im vorliegenden Fall mit einem Gummibelag 46 umkleidet ist. Dieser Aufsetzkonus 44 sitzt während des Beladens auf dem Dom 48 des nicht näher dargestellten Silofahrzeuges staubdicht auf.

Während des Beladevorganges sind die ineinandergeschobenen Rohre 16 so weit teleskopartig auseinandergezogen und damit nach unten in das Innere 50 des Silobehälters hineingefahren, daß - bei Beginn des Beladevorganges - der Auslaufkonus 22 so dicht wie möglich oberhalb des Silobodens 52 positioniert ist. Das durch den Fallschacht 40 nach unten zwischen dem Rand 26 und dem Auslaufkonus 22 herausströmende Schüttgut fällt dadurch mit geringer Höhe auf den Siloboden 52. Ein Entmischen des Schüttgutes, das außerhalb des Fallschachtes 40 auftreten könnte, tritt bei der vorhandenen geringen freien Fallhöhe damit nicht ein.

Sobald auf dem Siloboden 52 eine gewisse Menge an Schüttgut 54 vorhanden ist, und dasselbe in den Bereich des Füllstandsmelders 30 gelangt ist, wird von demselben ein Signal erzeugt, das dazu benutzt wird, das untere Rohr ein Stück weit anzuheben. Dadurch kann der Auslaufkonus 22 mit nach oben anwachsender Schüttguthöhe mehr oder weniger kontinuierlich mit nach oben verfahren werden. Während des gesamten Füllvorganges kann daher eine wünschenswert niedrige Fallhöhe für das Schüttgut außerhalb des Fallschachtes 40 sichergestellt werden.

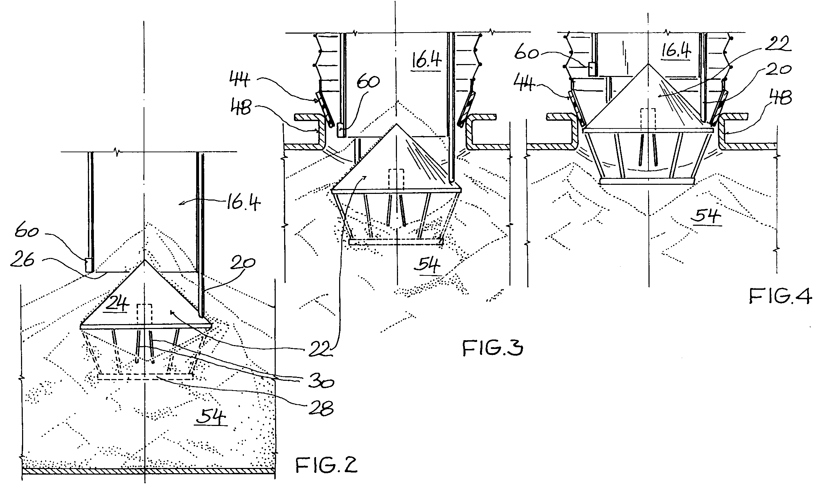

Während des Hochfahrens des unteren Rohres 16.4 und gegebenenfalls auch der sich anschließenden oberen Rohre, bleibt der Ringspalt zwischen dem Auslaufkonus und dem Rand 26 des untersten Rohres 16.4 frei. Durch den Fallschacht 40 kann also fortwährend Schüttgut nach unten herausströmen. Wenn der Auslaufkonus 22 in den Bereich des Domes 48 hochgefahren ist und er von unten an dem Aufsetzkonus 44 dicht anliegt (Fig. 4), ist der Fallschacht an sich immer noch nach unten offen. Es ist daher erforderlich, daß bei dem in Fig. 4 dargestellten Zustand durch den Schieber 12 sichergestellt wird, daß kein Schüttgut mehr aus dem Auslauftrichter 14 in den Fallschacht 40 einströmen kann.

Sobald der Auslaufkonus 22 seine in Fig. 4 dargestellte Anlage an dem Aufsetzkonus 44 erreicht hat, wird beim weiteren Hochfahren des Auslaufkonus 22, was durch weiteres Aufwickeln der Seile 32 erfolgt, der Aufsetzkonus 44 mit nach oben mitgenommen. Dadurch wird der Faltenbalg 42 beim Hochfahren der Rohre 16 mit hochgefahren. Beim Absenken des Fallschachtes 40 und damit beim Absenken des Auslaufkonus 22 wird der Aufsetzkonus 44 so lange nach unten infolge seines Eigengewichtes mit verfahren, bis er auf dem Dom 48 von oben aufsitzt. Durch weiteres Abwickeln der Seile 32 läßt sich dann der Fallschacht teleskopartig weiter nach unten auseinanderziehen, so daß der untere Rand 26 wünschenswert weit in das Innere 50 eintauchen kann.

Im Bereich des unteren Randes 26 des unteren Rohres 16.4 ist ein Sensor 60 angebracht. Sobald dieser Sensor 60 in den Bereich des Aufsetzkonus 44 gelangt ist (Fig. 3), wird ein elektrisches Signal zum Verschließen des Schiebers 12 erzeugt. Das Beenden des Befüllvorganges kann auf diese Weise automatisch bei entsprechend weit hochgefahrenen Rohren 16 erfolgen.

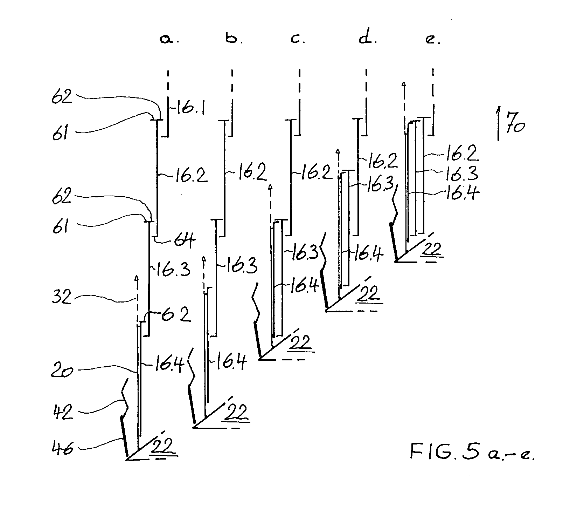

Aus Fig. 5 wird ersichtlich, daß die einzelnen Rohre nicht von unten ineinandergeschoben sondern ineinandergezogen werden. So greifen die Seile 32 am oberen Rand des untersten Rohres 16.4 an. Beim Hochziehen, d. h. beim Aufwickeln der Seile 32 wird also der Rohrabschnitt 16.4 nach oben gezogen. Am nach oben sich anschließenden Rohrabschnitt 16.3 ist ein nach außen auskragender und ein nach innen einkragender Kragen 61, 62 vorhanden. Dies trifft für alle nach oben sich anschließenden Rohre zu. Dadurch läßt sich das untere Rohr 16.4 bis zur Anlage an den äußeren Kragen 61 nach oben ziehen. Bei weiterem Aufwickeln der Seile 32 (Fig. 5c) wird das Rohr 16.3 mit nach oben bewegt, was durch eine Ziehbewegung und nicht durch eine Schiebebewegung von unten, wie es im Stand der Technik bekannt ist, erfolgt. Das gleiche gilt für die sich jeweils nach oben anschließenden Rohre 16.2, 16.1. Der an dem untersten Rohr im Abstand befestigte Auslaufkonus 22 wird zusammen mit dem untersten Rohr 16.4 nach oben bewegt und schiebt bei seiner Hochbewegung (Pfeil 70) den Aufsetzkonus 44 nach oben mit. Durch das Hochziehen der einzelnen Rohrabschnitte 16 bei ihrer Hochbewegung nach oben ist ein Verkeilen derselben praktisch ausgeschlossen.

Der untere Rand der ineinandergesteckten Rohre besitzt eine Auskragung 64, die von unten her an der einkragenden Schulter 62 des jeweils äußeren Rohres bei voll ausgezogenen Rohren zur Anlage kommt. Auf diese Weise wird die maximale Auszugbewegung der Rohre durch Anlage der Schultern 62, 64 begrenzt. Das Hochziehen der Rohre erfolgt durch Anlage der einspringenden Schulter 62 mit der auskragenden Schulter 60, verursacht durch Aufwickeln der Seile 32.

Außer dem Zugstab 20 ist im vorliegenden Fall auch noch eine elektrische Zuleitung für den Füllstandsmelder 30 außerhalb des Rohres 16.4 vorhanden, was nicht näher dargestellt ist. Diese elektrische Zuleitung würde im Falle eines pneumatischen Füllstandsmelder eine entsprechende Luftleitung beinhalten.

Im Bereich des Aufsetzkonus 44 ist eine mit Durchbrüchen für die Seile 32 ausgestattete Ringscheibe 80 vorhanden. Diese Ringscheibe umgibt die Rohre lose und liegt lose auf der Innenseite des Aufsetzkonus 44 auf. Sie stellt sicher, daß immer ein ausreichender Abstand 82 zwischen dem unteren Rand 84 des Aufsetzkonus 44 und den Rohren 16 vorhanden ist, so daß die Seile 32 nicht zwischen dem Rand 84 und den benachbarten Rohren eingeklemmt werden kann. Beim Hochfahren der Rohre liegt die Ringscheibe 80 frei auf dem oberen Rand 86 des untersten Rohres 16.4 auf.

## Patentansprüche

1. Vorrichtung (10) zum Beladen eines Silofahrzeuges oder dergleichen Silobehälter mit rieselfähigem Schüttgut (54), mit
- einem Fallschacht (40) für das Schüttgut (54) mit teleskopartig ineinandersteckbaren, sich nach unten im Querschnitt vergrößernden Rohrabschnitten (16),
- einem außerhalb des Fallschachtes (40) vorhandenen Abzugskanal zum Abführen des beim Befüllen entweichenden Schüttgut-Luft-Gemisches,
- einem Aufsetzkonus (44) zum staubdichten Aufsetzen der Vorrichtung auf der Einfüllöffnung (48) des Silofahrzeuges, der die äußere untere Umhüllung des Abzugskanals bildet,
- einem als Auslaufkonus (22) ausgebildeten und am unteren Rand des untersten Rohrabschnittes (16.4) angeordneten Verschlußteil zum Verschließen des unteren Endes des Aufsetzkonus (44),
- einer Zugvorrichtung (20, 32) zum Heben und Senken der unteren Mündung der Vorrichtung,
**dadurch gekennzeichnet,** daß
- auch der unterste Rohrabschnitt (16.4) im Querschnitt kleiner ist als der lichte Querschnitt des Aufsetzkonus (44), so daß beim Aufsitzen der Vorrichtung auf der Einfüllöffnung (48) der Fallschacht (40) durch die Einfüllöffnung (48) nach unten hindurchführbar ist,
- der Auslaufkonus (22) mit seiner Auslauffläche (24) immer in einem einen Ringspalt freilassenden Abstand zum unteren Rand (26) des untersten Rohrabschnittes (16.4) angeordnet ist.

2. Vorrichtung nach Anspruch 1,
**dadurch gekennzeichnet,** daß
- die Zugvorrichtung (20, 32) im oberen Randbereich des untersten Rohrabschnittes (16.4) befestigt ist.

3. Vorrichtung nach Anspruch 1 oder 2,
**dadurch gekennzeichnet,** daß
- ein Abstandshalter (80) im Zwischenraum zwischen dem Aufsetzkonus (44) und dem Fallschacht (40) vorhanden ist, durch den der untere Mündungsrand (84) des Aufsetzkonus (44) in einem derartigen Abstand von den Rohrabschnitten (16) haltbar ist, daß die Zugvorrichtung (32) für den Auslaufkonus nicht zwischen dem Mündungsrand (84) und den Rohrabschnitten des Aufsetzkonus (44) einklemmbar ist.

4. Vorrichtung nach Anspruch 3,
**dadurch gekennzeichnet,** daß
- der Abstandshalter eine den Rohrabschnitt lose umgebende Ringscheibe (80) ist.

5. Vorrichtung nach Anspruch 4,
**dadurch gekennzeichnet,** daß
- die Ringscheibe (80) auf dem oberen Rand eines Rohrabschnittes (16) lose aufliegen kann.

6. Vorrichtung nach einem der vorstehenden Ansprüche,
**dadurch gekennzeichnet,** daß
- eine Erkennungseinrichtung (60) so vorhanden ist, daß die Position einer vorgegebenen Stelle des Fallschachtes (40) im Bereich des Aufsetzkonus (44) feststellbar ist.

7. Vorrichtung nach Anspruch 6,
**dadurch gekennzeichnet,** daß
- zumindest ein Näherungsschalter (60) im Mantelbereich des untersten Rohrabschnittes (16.4) vorhanden ist, durch den bei vorbestimmbarem Abstand zum Aufsetzkonus (44) ein Schaltsignal zum Beenden des Befüllvorganges erzeugbar ist.

8. Vorrichtung nach Anspruch 7,
**dadurch gekennzeichnet,** daß
- der Näherungsschalter ein induktiver Näherungsschalter (60) ist.

9. Vorrichtung nach einem der vorstehenden Ansprüche,
**dadurch gekennzeichnet,** daß
- die Zugvorrichtung (32) zumindest ein Zugmittel enthält, das von nur einer Winde auf- und abwickelbar ist.

10. Vorrichtung nach einem der vorstehenden Ansprüche,
**dadurch gekennzeichnet,** daß
- ein Füllstandsmelder (30) am Auslaufkonus (22) vorhanden ist.

11. Vorrichtung nach Anspruch 10,
**dadurch gekennzeichnet,** daß
ein elektrischer Füllstandsmelder (30) vorhanden ist.

12. Vorrichtung nach Anspruch 11,
**dadurch gekennzeichnet,** daß
der Füllstandsmelder eine Vibrationssonde (30) ist.

## Claims

1. Device (10) for loading a silo vehicle or similar silo container with flowable bulk material (54), with
- a chute (40) for the bulk material (54) with tube sections (16) which can be inserted telescopically one into another and the cross-section of which increases in the downward direction,
- an offtake duct, present outside the chute (40), for carrying off the bulk material/air mixture which escapes during filling,
- a set-down cone (44) for the dustproof setting down of the device on the filling opening (48) of the silo vehicle, which cone forms the outer lower casing of the offtake duct,
- a closing part, designed as an outlet cone (22) and arranged at the lower edge of the lowest tube section (16.4), for closing the lower end of the set-down cone (44),
- a pull device (20, 32) for raising and lowering the lower mouth of the device, characterized in that
- the lowest tube section (16.4) too has a cross-section which is smaller than the clear cross-section of the set-down cone (44), so that, when the device rests on the filling opening (48), the chute (40) can be guided downwards through the filling opening (48),
- the outlet cone (22) is always arranged with its outlet surface (24) at a distance from the lower edge (26) of the lowest tube section (16.4) which leaves an annular gap open.

2. Device according to Claim 1, characterized in that the pull device (20, 32) is fastened in the upper edge region of the lowest tube section (16.4).

3. Device according to Claim 1 or 2, characterized in that a distance piece (80) is present in the interspace between the set-down cone (44) and the chute (40), by means of which the lower mouth edge (84) of the set-down cone (44) is kept at such a distance from the tube sections (16) that the pull device (32) for the outlet cone cannot become caught between the mouth edge (84) and the tube sections of the set-down cone (44).

4. Device according to Claim 3, characterized in that the distance piece is an annular disc (80) which surrounds the tube section loosely.

5. Device according to Claim 4, characterized in that the annular disc (80) can rest loosely on the upper edge of a tube section (16).

6. Device according to one of the preceding claims, characterized in that a recognition arrangement (60) is present in such a manner that the position of a predetermined point of the chute (40) can be detected in the region of the set-down cone (44).

7. Device according to Claim 6, characterized in that at least one proximity switch (60) is present in the outer region of the lowest tube section (16.4), by means of which, at a predefinable distance from the set-down cone (44), a switching signal for stopping the filling operation can be generated.

8. Device according to Claim 7, characterized in that the proximity switch is an inductive proximity switch (60).

9. Device according to one of the preceding claims, characterized in that the pull device (32) contains at least one pull means which can be wound up or unwound by only one winch.

10. Device according to one of the preceding claims, characterized in that a filling level indicator (30) is present on the outlet cone (22).

11. Device according to Claim 10, characterized in that an electric filling level indicator (30) is present.

12. Device according to Claim 11, characterized in that the filling level indicator is a vibration probe (30).

## Revendications

1. Dispositif (10) pour charger un véhiculesilo ou un récipient-silo semblable avec du produit en vrac (54) capable de s'écouler, comprenant
- un conduit de chute (40) pour le produit en vrac (54), possédant des tronçons tubulaires (16) mutuellement emboîtables télescopiquement et dont la section droite augmente vers le bas,
- un canal d'extraction, se trouvant à l'extérieur du conduit de chute (40), pour l'évacuation du mélange de produit en vrac et d'air s'échappant lors du remplissage,
- un cône d'appui (44) pour poser le dispositif de façon étanche à la poussière sur l'ouverture de remplissage (48) du véhicule-silo, cône qui forme l'enveloppe externe inférieure du canal d'extraction,
- une pièce de fermeture, réalisée sous la forme d'un cône d'écoulement ou de sortie (22) et disposée sur le bord inférieur du tronçon tubulaire 16.4 le plus bas, pour fermer l'extrémité inférieure du cône d'appui (44) et
- un dispositif de tirage (20, 32) pour soulever et abaisser l'embouchure en bas du dispositif,
caractérisé en ce que
- le tronçon tubulaire (16.4) le plus bas possède également une section droite plus petite que la section droite intérieure du cône d'appui (44), si bien que, lorsque le dispositif est posé sur l'ouverture de remplissage (48), le conduit de chute (40) peut être passé de haut en bas à travers l'ouverture de remplissage (48),
- le cône de sortie (22) est disposé de manière que sa surface d'écoulement (24) se trouve toujours à une distance, laissant subsister une fente annulaire, du bord inférieur (26) du tronçon tubulaire (16.4) le plus bas.

2. Dispositif selon la revendication 1, caractérisé en ce que le dispositif de tirage (20, 32) est fixé dans la zone du bord supérieur du tronçon tubulaire (16.4) le plus bas.

3. Dispositif selon la revendication 1 ou 2, caractérisé en ce qu'une pièce d'écartement (80) est placée dans l'intervalle entre le cône d'appui (44) et le conduit de chute (40), pièce par laquelle le bord (84) de l'embouchure en bas du cône d'appui (44) peut être maintenu à une telle distance des tronçons tubulaires (16) que le dispositif de tirage (32) pour le cône de sortie ne peut pas être coincé entre ce bord d'embouchure (84) du cone d'appui (44) et les tronçons tubulaires.

4. Dispositif selon la revendication 3, caractérisé en ce que la pièce d'écartement est un disque annulaire (80) qui entoure librement les tronçons tubulaires.

5. Dispositif selon la revendication 4, caractérisé en ce que le disque annulaire (80) peut reposer librement sur le bord supérieur d'un tronçon tubulaire (16).

6. Dispositif selon une des revendications précédentes, caractérisé en ce qu'un dispositif de détection (60) est prévu pour déterminer la position d'un point préfixé du conduit de chute (40) dans la zone du cône d'appui (44).

7. Dispositif selon la revendication 6, caractérisé en ce qu'au moins un détecteur de proximité (60) est installé dans la zone de la paroi latérale du tronçon tubulaire (16.4) le plus bas, détecteur par lequel peut être généré un signal de commande pour arrêter l'opération de remplissage lorsqu'il se trouve à une distance pouvant être préfixée du cône d'appui (44).

8. Dispositif selon la revendication 7, caractérisé en ce que le détecteur de proximité est un détecteur de proximité inductif (60).

9. Dispositif selon une des revendications précédentes, caractérisé en ce que le dispositif de tirage (32) comporte au moins un moyen de traction susceptible d'être enroulé et déroulé par un seul treuil.

10. Dispositif selon une des revendications précédentes, caractérisé en ce qu'un indicateur de niveau (30) est prévu sur le cône de sortie (22).

11. Dispositif selon la revendication 10, caractérisé en ce qu'il est prévu un indicateur de niveau (30) électrique.

12. Dispositif selon la revendication 11, caractérisé en ce que l'indicateur de niveau est une sonde à vibrations (30).
